# EUROPÄISCHE PATENTSCHRIFT

(11) **EP 1 363 764 B1**
(45) Veröffentlichungstag und Bekanntmachung des Hinweises auf die Patenterteilung: **26.11.2008**
(21) Anmeldenummer: 02719644.3
(22) Anmeldetag: 01.03.2002
(51) Int. Cl.: B29C 63/48, B29C 65/00

(54) **VERFAHREN ZUM VERSEHEN EINES FESTKÖRPERS MIT EINER OBERFLÄCHENSCHICHT UND EINER KLEBEFOLIE SOWIE FESTKÖRPER NACH DIESEM VERFAHREN**
METHOD FOR COVERING A SOLID BODY WITH A SURFACE LAYER AND AN ADHESIVE FILM, AND A CORRESPONDING SOLID BODY
PROCEDE POUR APPLIQUER UNE COUCHE SUPERFICIELLE ET UN FILM ADHESIF SUR UN CORPS SOLIDE ET CORPS SOLIDE OBTENU SELON CE PROCEDE

(30) Priorität: 01.03.2001 DE 10109991; 29.06.2001 DE 10131296
(43) Veröffentlichungstag der Anmeldung: 26.11.2003
(73) Patentinhaber: Continental Automotive GmbH, 30165 Hannover (DE)
(72) Erfinder: ESSER, Edwin, 63128 Dietzenbach (DE); WEDEL, Hans, 64367 Mühltal (DE)
(86) Internationale Anmeldenummer: PCT/DE2002/000730
(87) Internationale Veröffentlichungsnummer: WO 2002/070234

(56) Entgegenhaltungen:
- EP-A- 0 856 400
- EP-A- 0 927 626
- WO-A-00/01528
- DE-A- 4 228 040
- US-A- 5 472 544

## Beschreibung

Die Erfindung betrifft ein Verfahren zum Versehen eines Festkörpers mit einer Oberflächenschicht und darauf einer Klebefolie, wobei zuerst die Oberflächenschicht auf den Festkörper aufgebracht wird. Darüber hinaus betrifft die Erfindung einen mittels eines solchen Verfahrens mit einer Oberflächenschicht und einer Klebefolie versehenen Festkörper.

Es sind Verfahren bekannt, um beispielsweise Kunststoff-Festkörper unmittelbar mit Klebefolien, die einen Kleberand oder entsprechende Symbole aufweisen, zu versehen. Unter anderem werden solche Verfahren zur Anbringung von Klebefolien, beispielsweise Heißprägefolien, auf Deckscheiben von Anzeigeinstrumenten für Kraftfahrzeuge angewandt. Diese Klebefolien sind üblicherweise in einem Randbereich der Deckscheibe angeordnet und decken z. B. einen Verbindungsbereich der Deckscheibe mit einem Gehäuserahmen des Anzeigeinstruments ab. Üblicherweise sind die Anzeigeinstrumente so aufgebaut, daß die Deckscheibe in den Rahmen eingesetzt und an diesem mittels einer verschweißbaren Nut-Feder-Verbindung befestigt wird. Die Feder wird dabei von einem im Randbereich der Scheibe verlaufenden und in etwa senkrecht von der Scheibenfläche abstehenden Steg gebildet, der in einer entsprechenden Nut am Gehäuserahmen verläuft. Durch beispielsweise Ultraschall- oder Vibrationsschweißen werden die Deckscheibe und der Rahmen im Bereich der Nut-Feder-Verbindung miteinander verbunden. Häufig liegt die dabei entstehende Verbindungsnaht im Sichtbereich des Fahrzeugführers, so daß die eingangs genannte Klebefolie auf der Oberseite der Deckscheibe zur Abdeckung der Nut-Feder-Verbindung aufgebracht wird. Dazu ist die Folie üblicherweise undurchsichtig.

Ferner ist es bekannt, Deckscheiben von Anzeigeinstrumenten mit einem kratzfesten, glasartigen Überzug zu versehen, um sie vor Umwelteinflüssen, insbesondere mechanischer Beschädigung, zu schützen. Dabei haftet die Klebefolie auf den üblicherweise zum Einsatz kommenden Beschichtungsmaterialien in der Regel nicht, da der Überzug chemisch inert ist.

Es wurde daher schon daran gedacht, zuerst die Klebefolie auf die Deckscheibe aufzubringen und anschließend die gesamte Oberfläche mit dem kratzfesten Überzug zu versehen. Dabei ergeben sich jedoch sichtbare Unregelmäßigkeiten in der Schichtstärke des Überzugs, die zu einer insbesondere in Kraftfahrzeugen aus Gründen der Verkehrssicherheit nicht tolerierbaren verschlechterten Ablesbarkeit des Anzeigeinstrumentes führen. Vor allem bei Sonneneinstrahlung kann es zu die Ablesbarkeit verschlechternden Reflexionen kommen.

Weitere Lösungsvorschläge bestehen darin, entweder die Klebefolie durch eine Lackierung zu ersetzen oder auf den auf die Deckscheibe aufgebrachten glasartigen Überzug einen Haftvermittler aufzubringen und erst anschließend die Klebefolie aufzukleben. Um eine optische Veränderung der Deckscheibe (und damit eine verschlechterte Ablesbarkeit des Instrumentes) zu vermeiden, darf der Haftvermittler jedoch ausschließlich in den zu überklebenden Bereichen aufgebracht werden. Die letztgenannten Verfahren sind sehr aufwendig und daher insbesondere für eine Serienfertigung, wie sie zum Beispiel Anzeigeinstrumente für Kraftfahrzeuge erfordern, völlig ungeeignet.

Verfahren zur Oberflächenvorbereitung von Kunststoffgegenständen zur Verbesserung der Haftfähigkeit derselben sind aus der EP-A-0 927 626, der EP-A-0 856 400 und der DE-A-42 28 040 bekannt.

Die vorliegender Erfindung zugrundeliegende Aufgabe besteht mithin darin, ein kostengünstiges, für eine Serienfertigung geeignetes Verfahren zum Anbringen einer Oberflächenschicht und einer Klebefolie auf einem Festkörper zu schaffen, wobei die Oberflächenschicht keine Beschädigung aufweist. Außerdem soll eine Abdeckung für ein Anzeigeinstrument geschaffen werden, die so aufgebaut ist, daß die Deckscheibe kratzfest und die Schweißnaht nicht sichtbar ist.

Diese Aufgabe wird gemäß der Erfindung dadurch gelöst, daß die Oberflächenenergie der Außenseite der auf den Festkörper aufgebrachten Oberflächenschicht zumindest in einem Bereich, in dem ein Anbringen der Klebefolie vorgesehen ist, derart erhöht wird, daß die Molekülstrukturen an der Außenseite der Oberflächenschicht in vorgenanntem Bereich temporär aufgebrochen werden, und daß anschließend die Klebefolie auf die Außenseite der Oberflächenschicht aufgeklebt wird, wobei die Molekülstrukturen sich im aufgebrochenen Zustand befinden. Durch die Erhöhung der Oberflächenenergie der Außenseite der Oberflächenschicht, auf welche Außenseite die Klebefolie aufzubringen ist, wird die Schicht reaktiv so verändert, daß die Klebefolie dauerhaft auf ihr haftet. Haftvermittler oder andere Zusatzstoffe sind nicht erforderlich. Zudem erfolgt keine Veränderung der mechanischen und insbesondere optischen Eigenschaften des Festkörpers. Das erfindungsgemäße Verfahren ist vorteilhaft von nur geringem Aufwand und führt bei Serienfertigung zu einer sehr geringen Fehlerquote. Es eignet sich besonders für Festkörper, an deren Oberflächeneigenschaften hohe Anforderungen gestellt werden. Es ist lediglich erforderlich, die Oberflächenenergie in den Bereichen wie beschrieben zu erhöhen, in denen die Klebefolie aufzubringen ist. Auf Grund des nur temporären Aufbrechens der Molekülstrukturen ist jedoch auch eine Vorbehandlung der gesamten Oberflächenschicht möglich, ohne daß es zu Beschädigungen an der Oberflächenschicht oder dem Festkörper kommt. Die Oberflächenschicht kann ferner sehr gleichmäßig ausgeführt werden, und die Außenseite der Klebefolie bleibt von dem erfindungsgemäßen Verfahren unbeeinflußt, sie kann daher zum Beispiel auch matt sein.

Zur Erhöhung der Oberflächenenergie ist die Anwendung verschiedenster, insbesondere hoch energetischer, Verfahren denkbar. Als besonders vorteilhaft hat es sich erwiesen, wenn zur Erhöhung ihrer Oberflächenenergie die Außenseite der auf den Festkörper aufgebrachten Oberflächenschicht mit Plasma beaufschlagt wird. Bei dem Plasma handelt es sich um eine Wolke von ionisertem Gas. Wird dieses Plasma mit der Oberflächenschicht in Kontakt gebracht, so werden auch die molekularen Strukturen an der Außenseite der Oberflächenschicht temporär verändert, wodurch unmittelbar eine Erhöhung der Oberflächenenergie erfolgt. In diesem Zustand der Oberflächenschicht wird die Klebefolie aufgebracht, und es ergibt sich eine dauerhafte Verbindung.

Die Plasma-Beaufschlagung könnte beispielsweise mit einer NiederdruckPlasma-Behandlung erfolgen. Eine hierfür erforderliche evakuierte Behandlungskammer ist jedoch vergleichsweise aufwendig. Wesentlich einfacher ist es, wenn gemäß einer anderen vorteilhaften Weiterbildung der Erfindung das Plasma bei Atmosphärendruck erzeugt wird. Dadurch ist insbesondere der Einsatz des Verfahrens in der Serienfertigung möglich.

Gemäß einer anderen vorteilhaften Weiterbildung der Erfindung wird zur Erhöhung ihrer Oberflächenenergie die Außenseite der auf den Festkörper aufgebrachten Oberflächenschicht mit kurzwelliger energiereicher UV-Strahlung beaufschlagt. Ebenfalls von Vorteil ist es, wenn zur Erhöhung ihrer Oberflächenenergie die Außenseite der auf den Festkörper aufgebrachten Oberflächenschicht in einem Korona-Verfahren behandelt wird. Eine vorgenannte Bestrahlung (Beaufschlagung mit UV-Strahlung) oder ein sogenanntes Gasentladungsverfahren (Korona-Verfahren) ist vorzugsweise dann einsetzbar, wenn entsprechende Maschinen und Vorrichtungen bereits vorhanden sind und für das erfindungsgemäße Verfahren mit genutzt werden sollen.

Durch die erfindungsgemäße Methode kann die Oberflächenschicht für einen begrenzten Zeitraum angeregt werden, während dessen das Aufbringen der Klebefolie möglich ist. Es hat sich in der Regel ein Zeitfenster von ca. 30 Minuten als günstig und praktikabel erwiesen.

Die oben genannte Aufgabe wird ferner gelöst durch einen mittels eines vorgenannten Verfahrens mit einer Oberflächenschicht und einer Klebefolie versehenen Festkörper, wobei der Festkörper eine Deckscheibe eines Anzeigeinstrumentes und die Oberflächenschicht eine Kratzfestbeschichtung ist. Dadurch wird eine sehr hohe optische Qualität der Deckscheibe auch nach Anbringung der Klebefolie gewährleistet. Außerdem ist die Deckscheibe vor mechanischer Beschädigung, wie zum Beispiel Zerkratzen, weitestgehend geschützt. Die nach dem erfindungsgemäßen Verfahren hergestellte Deckscheibe ist daher besonders geeignet für Anzeigeinstrumente, deren Ablesbarkeit sicherheitsrelevant ist, was insbesondere für Anzeigeinstrumente in Kraftfahrzeugen zutrifft.

Eine Klebeverbindung besonders hoher und dauerhafter Qualität wird vorteilhaft erhalten, wenn die Klebefolie gemäß einer anderen Weiterbildung der Erfindung eine Heißprägefolie ist.

Um eine besonders langzeitbeständige Verbindung mit der Oberflächenschicht zu erhalten, weist die Klebefolie als Haftschicht vorteilhaft einen Schmelzkleber auf. Vorzugsweise ist der Schmelzkleber ein Polyamidschmelzkleber. Damit lassen sich insbesondere bei Verwendung an Heißprägefolien besonders belastbare Klebeverbindungen erzielen. Der Polyamidschmelzkleber wird durch Erhitzen auf Heißklebetemperatur geschmolzen und damit als Klebstoff aktiviert.

Gemäß einer anderen vorteilhaften Weiterbildung der Erfindung ist die Klebefolie in einem umlaufenden Randbereich der Deckscheibe angeordnet, wodurch sie ohne Veränderung der optischen Eigenschaften der Deckscheibe einen äußeren Bereich sicher abdecken kann. Vorzugsweise deckt die Klebefolie einen Verbindungsbereich der Deckscheibe mit einem Gehäusebauteil des Anzeigeinstrumentes ab, so daß das Anzeigeinstrument eine klare, die Ablesbarkeit nicht behindernde Gestaltung aufweist.

Es ist aber auch vorstellbar, daß die Klebefolie gemäß einer anderen vorteilhaften Weiterbildung der Erfindung ein graphisches Element einer Anzeige des Anzeigeinstrumentes bildet. Auf diese Weise kann die Deckscheibe kostengünstig und einfach Elemente, die anderenfalls beispielsweise einem Zifferblatt zugeordnet wären, aufnehmen. Die graphischen Elemente können unter anderem Skalierungen, Skalenbeschriftungen oder Anzeigefelder mit Hinweissymbolen sein.

Es ist vorstellbar, als Werkstoff für die Deckscheibe Glas oder beliebige, im wesentlichen transparente Kunststoffe zu verwenden. Eine besonders hohe Transparenz der Deckscheibe liegt in Verbindung mit mechanischer Stabilität und einfacher Herstellbarkeit jedoch dann vor, wenn gemäß einer anderen vorteilhaften Weiterbildung der Erfindung die Deckscheibe im wesentlichen aus PMMA (Polymetylmetachrylat) besteht.

Insbesondere in Kraftfahrzeugen ist es von Vorteil, wenn die Deckscheibe gemäß einer anderen Weiterbildung der Erfindung eine Entspiegelungsschicht und/oder eine Antibeschlagschicht ist, so daß auch bei ungünstigen Licht- und/oder Temperatur- und Luftfeuchtigkeitsverhältnissen das Anzeigeinstrument einwandfrei ablesbar ist.

Die Oberflächenschicht der Deckscheibe ist kratzfest und gleichzeitig besonders gut in dem erfindungsgemäßen Verfahren verwendbar, wenn sie auf der Basis von Polysiloxanen aufgebaut ist.

Die Erfindung kann sehr unterschiedlich ausgeführt werden. Sie wird im folgenden anhand eines in den beigefügten Abbildungen dargestellten Ausführungsbeispiels näher erläutert. Darin zeigt in schematisierter Darstellung
- Figur 1: eine Deckscheibe gemäß der Erfindung in geschnittener Seitenansicht und
- Figur 2: die Deckscheibe nach Figur 1 in Vorderansicht.

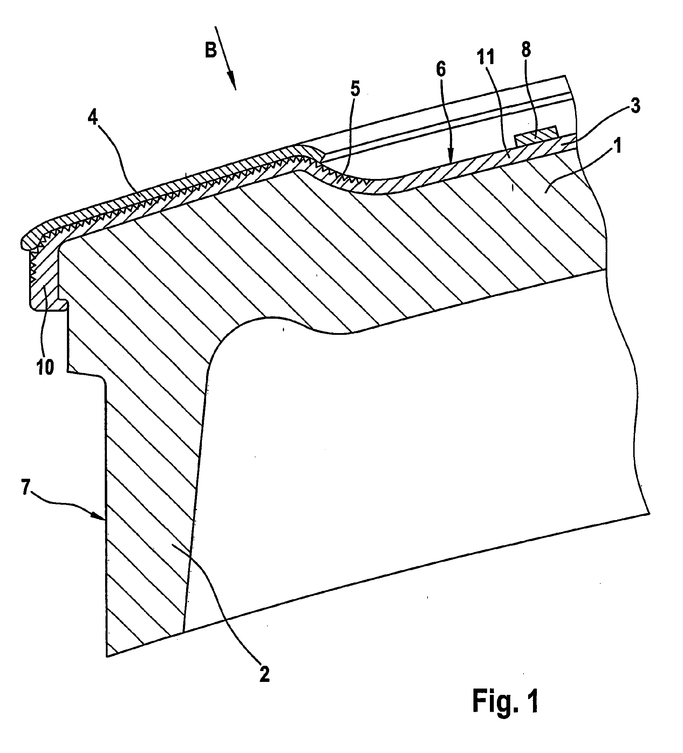

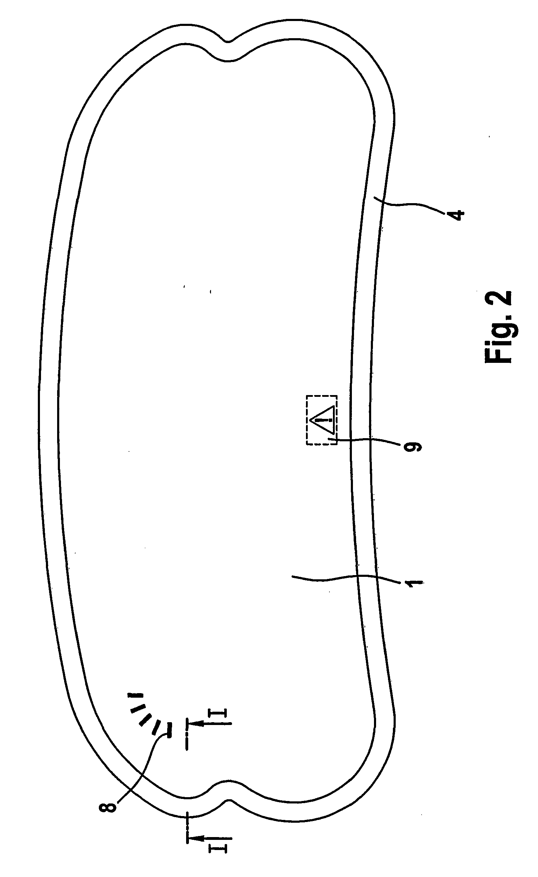

In Figur 1 ist ein Randbereich einer Deckscheibe 1 eines hier nicht weiter dargestellten Kombinationsanzeigeinstrumentes eines Kraftfahrzeuges in geschnittener Seitenansicht gezeigt. Diese Deckscheibe 1 hat eine längliche, in etwa elliptische Form (vergl. Figur 2) entsprechend der Gestaltung eines Gehäuserahmens des Kombinationsanzeigeinstrumentes. An ihrer gegenüber einer Betrachtungsrichtung B eines Fahrzeuginsassen rückwärtigen Seite befindet sich in etwa senkrecht abstehend und umlaufend ein Steg 2 der Deckscheibe 1, der in eine entsprechende Nut im Gehäuserahmen eingesetzt und mit diesem verbunden, beispielsweise verschweißt, wird. Auf der gesamten Vorderseite der Deckscheibe 1 ist eine glasartige, kratzfeste Oberflächenschicht 3 aufgebracht. Die Oberflächenschicht 3 umgreift mit einem Randbereich 10 ein wenig die Vorderseite der Deckscheibe 1, um eine vollständige Bedeckung der Deckscheibe 1 sicherzustellen. Die Deckscheibe 1 ist damit gegen Umwelteinflüsse, insbesondere kratzende Beschädigungen, geschützt, so daß ihre Oberfläche stets glasklar bleibt und die Anzeigeinstrumente über die gesamte Lebensdauer des Fahrzeugs gut zu erkennen sind.

Einen Verbindungsbereich 7, der den Steg 2 aufweist, zur Anbringung der Deckscheibe 1 an dem Gehäuserahmen abdeckend ist auf der Oberflächenschicht 3 in deren Randbereich 5 umlaufend eine Heißprägefolie 4 aufgebracht. Die Heißprägefolie 4 ist auf die Außenseite 6 der Oberflächenschicht 3 aufgeklebt.

Bevor die Heißprägefolie 4 aufgeklebt wird, wird die kratzfeste Oberflächenschicht 3 an ihrer Außenseite 6 in dem durch eine Zick-Zack-Linie angedeuteten Randbereich 5 zur Erhöhung ihrer Oberflächenenergie mit Atmosphärendruck-Plasma beaufschlagt. Die Zick-Zack-Linie soll den Zustand der Oberflächenschicht 3 mit durch die Erhöhung der Oberflächenenergie aufgebrochenen Molekülstrukturen, die kurz nach Aufbringen der Heißprägefolie 4 noch vorliegen, verdeutlichen; die Molekülstruktur der Oberflächenschicht 3 fällt im folgenden dann wieder in ihren Ursprungszustand zurück. Durch die energetische Behandlung der Oberfläche ergeben sich somit keine bleibenden optischen Veränderungen, da die Flächenenergie wieder abgebaut wird. Ein Unterschied zwischen dem Randbereich 5 der Oberflächenschicht 3 und den übrigen Bereichen der Oberflächenschicht 3 liegt dann nicht mehr vor.

In einem solchen, wieder ursprünglichen Zustand ist die Oberflächenschicht 3 in einem Bereich 11 dargestellt, in dem eine Heißprägefolie in Form eines graphischen Elements 8 aufgebracht ist. Aus Figur 2 wird deutlich, daß das graphische Element 8 Bestandteil einer Skalierung eines hier nicht weiter dargestellten Analoganzeigeinstrumentes, beispielsweise einer Tankanzeige, ist. Außerdem ist in einem zentralen Bereich der Deckscheibe 1 ein weiteres graphisches Element 9 in Form eines Warnfeldes als Heißprägefolie ebenfalls in dem vorbeschriebenen Verfahren aufgebracht. Zudem zeigt Figur 2 die den Verbindungsbereich der Deckscheibe 1 mit dem Gehäuserahmen abdeckende Heißprägefolie 4 sowie eine Schnittlinie I-I, die die Lage der Schnittansicht nach Figur 1 angibt.

## Patentansprüche

1. Verfahren zum Versehen eines Festkörpers (1) mit einer Oberflächenschicht (3) und darauf einer Klebefolie (4), wobei zuerst die Oberflächenschicht (3) auf den Festkörper (1) aufgebracht wird, **dadurch gekennzeichnet, daß** die Oberflächenenergie der Außenseite (6) der auf den Festkörper (1) aufgebrachten Oberflächenschicht (3) zumindest in einem Bereich (5), in dem ein Anbringen der Klebefolie (4) vorgesehen ist, derart erhöht wird, daß die Molekülstrukturen an der Außenseite (6) der Oberflächenschicht (3) in vorgenanntem Bereich (5) temporär aufgebrochen werden, und daß anschließend die Klebefolie (4) auf die Außenseite (6) der Oberflächenschicht (3) aufgeklebt wird, wobei die Molekülstrukturen sich im aufgebrochenen Zustand befinden.

2. Verfahren nach Anspruch 1, **dadurch gekennzeichnet, daß** zur Erhöhung ihrer Oberflächenenergie die Außenseite (6) der auf den Festkörper (1) aufgebrachten Oberflächenschicht (3) mit Plasma beaufschlagt wird.

3. Verfahren nach Anspruch 2, **dadurch gekennzeichnet, daß** das Plasma bei Atmosphärendruck erzeugt wird.

4. Verfahren nach Anspruch 1, **dadurch gekennzeichnet, daß** zur Erhöhung ihrer Oberflächenenergie die Außenseite (6) der auf den Festkörper (1) aufgebrachten Oberflächenschicht (3) mit kurzwelliger energiereicher UV-Strahlung beaufschlagt wird.

5. Verfahren nach Anspruch 1, **dadurch gekennzeichnet, daß** zur Erhöhung ihrer Oberflächenenergie die Außenseite (6) der auf den Festkörper (1) aufgebrachten Oberflächenschicht (3) in einem Korona-Verfahren behandelt wird.

6. Mittels eines Verfahrens nach einem der vorhergehenden Ansprüche mit einer Oberflächenschicht (3) und einer Klebefolie (4) versehener Festkörper (1), **dadurch gekennzeichnet, daß** der Festkörper (1) eine Deckscheibe eines Anzeigeinstrumentes und die Oberflächenschicht (3) eine Kratzfestbeschichtung ist.

7. Deckscheibe nach Anspruch 6, **dadurch gekennzeichnet, daß** die Klebefolie (4) eine Heißprägefolie ist.

8. Deckscheibe nach Anspruch 6 oder 7, **dadurch gekennzeichnet, daß** die Klebefolie (4) als Haftschicht einen Schmelzkleber aufweist.

9. Deckscheibe nach Anspruch 8, **dadurch gekennzeichnet, daß** der Schmelzkleber ein Polyamidschmelzkleber ist.

10. Deckscheibe nach einem der Ansprüche 6 bis 9, **dadurch gekennzeichnet, daß** die Klebefolie (4) in einem umlaufenden Randbereich (5) der Deckscheibe (1) angeordnet ist.

11. Deckscheibe nach Anspruch 10, **dadurch gekennzeichnet, daß** die Klebefolie (4) einen Verbindungsbereich (7) der Deckscheibe (1) mit einem Gehäusebauteil des Anzeigeinstrumentes abdeckt.

12. Deckscheibe nach einem der Ansprüche 6 bis 9, **dadurch gekennzeichnet, daß** die Klebefolie ein graphisches Element (8, 9) einer Anzeige des Anzeigeinstrumentes bildet.

13. Deckscheibe nach einem der Ansprüche 6 bis 12, **dadurch gekennzeichnet, daß** sie im wesentlichen aus PMMA besteht.

14. Deckscheibe nach einem der Ansprüche 6 bis 13, **dadurch gekennzeichnet, daß** die Oberflächenschicht (3) eine Entspiegelungsschicht und/oder eine Antibeschlagschicht ist.

15. Deckscheibe nach einem der Ansprüche 6 bis 14, **dadurch gekennzeichnet, daß** die Oberflächenschicht (3) auf der Basis von Polysiloxanen aufgebaut ist.

## Claims

1. Method for providing a solid body (1) with a surface layer (3) and an adhesive film (4) on the latter, the surface layer (3) being applied first to the solid body (1), **characterized in that** the surface energy of the exterior (6) of the surface layer (3) applied to the solid body (1) is increased in at least one area (5) where the adhesive film (4) is to be applied, in such a way that the molecular structures on the exterior (6) of the surface layer (3) are temporarily fragmented in the aforementioned area (5), and **in that** the adhesive film (4) is subsequently bonded to the exterior (6) of the surface layer (3), with the molecular structures being in the fragmented state.

2. Method according to Claim 1, **characterized in that,** to increase its surface energy, the exterior (6) of the surface layer (3) applied to the solid body (1) is exposed to plasma.

3. Method according to Claim 2, **characterized in that** the plasma is generated at atmospheric pressure.

4. Method according to Claim 1, **characterized in that,** to increase its surface energy, the exterior (6) of the surface layer (3) applied to the solid body (1) is exposed to short-wave high-energy UV radiation.

5. Method according to Claim 1, **characterized in that**, to increase its surface energy, the exterior (6) of the surface layer (3) applied to the solid body (1) is treated in a corona process.

6. Solid body (1) provided with a surface layer (3) and an adhesive film (4) by means of a method according to one of the preceding claims, **characterized in that** the solid body (1) is a cover screen of an indicating instrument and the surface layer (3) is a scratch-resistant coating.

7. Cover screen according to Claim 6, **characterized in that** the adhesive film (4) is a hot embossing film.

8. Cover screen according to Claim 6 or 7, **characterized in that** the adhesive film (4) has a hot-melt adhesive as the adhesive layer.

9. Cover screen according to Claim 8, **characterized in that** the hot-melt adhesive is a polyamide hot-melt adhesive.

10. Cover screen according to one of Claims 6 to 9, **characterized in that** the adhesive film (4) is arranged in a peripheral edge area (5) of the cover screen (1).

11. Cover screen according to Claim 10, **characterized in that** the adhesive film (4) covers over a connecting area (7) of the cover screen (1) with a housing component of the indicating instrument.

12. Cover screen according to one of Claims 6 to 9, **characterized in that** the adhesive film forms a graphic element (8, 9) of an indication of the indicating instrument.

13. Cover screen according to one of Claims 6 to 12, **characterized in that** it substantially consists of PMMA.

14. Cover screen according to one of Claims 6 to 13, **characterized in that** the surface layer (3) is an antireflection layer and/or an antimisting layer.

15. Cover screen according to one of Claims 6 to 14, **characterized in that** the surface layer (3) is constructed on the basis of polysiloxanes.

## Revendications

1. Procédé pour munir un corps (1) solide d'une couche (3) superficielle et dessus d'un film (4) adhésif, dans lequel on dépose d'abord la couche (3) superficielle sur le corps (1) solide, **caractérisé en ce que** l'on augmente l'énergie superficielle de la face extérieure de la couche (3) superficielle déposée sur le corps (1) solide au moins dans une zone (5) dans laquelle est prévue l'apposition du film (4) adhésif de façon à interrompre temporairement dans la zone (5) mentionnée ci-dessus les structures moléculaires sur la face (6) extérieure de la couche (3) superficielle et **en ce qu'**ensuite on colle le film (4) adhésif sur la face (6) extérieure de la couche (3) superficielle, les structures moléculaires se trouvant à l'état rompu.

2. Procédé suivant la revendication 1, **caractérisé en ce que,** pour augmenter son énergie superficielle, on soumet la face (6) extérieure de la couche (3) superficielle déposée sur le corps (1) solide a l'effet d'un plasma.

3. Procédé suivant la revendication 2, **caractérisé en ce que** l'on produit le plasma à la pression atmosphérique.

4. Procédé suivant la revendication 1, **caractérisé en ce que,** pour augmenter sa surface superficielle, on soumet la face (6) extérieure de la couche (3) superficielle déposée sur le corps (1) solide à du rayonnement UV riche en énergie de courte longueur d'onde.

5. Procédé suivant la revendication 1, **caractérisé en ce que,** pour augmenter son énergie superficielle, on traite la face (6) extérieure de la couche (3) superficielle déposée sur le corps (1) solide dans un procédé à effet couronne.

6. Moyen d'un procédé suivant l'une des revendications précédentes, comprenant un corps (1) solide muni d'une couche (3) superficielle et d'un film (4) adhésif, **caractérisé en ce que** le corps (1) solide est la vitre de recouvrement d'un instrument d'affichage et la couche (3) superficielle est un revêtement anti-abrasion.

7. Vitre de recouvrement suivant la revendication 6, **caractérisée en ce que** le film (4) adhésif est un film estampé à chaud.

8. Vitre de recouvrement suivant la revendication 6 ou 7, **caractérisée en ce que** le film (4) adhésif comporte comme couche d'adhérence une colle fusible.

9. Vitre de recouvrement suivant la revendication 8, **caractérisée en ce que** la colle fusible est une colle fusible en polyamide.

10. Vitre de recouvrement suivant l'une des revendications 6 à 9, **caractérisée en ce que** le film (4) adhésif est disposé dans une partie (5) marginale faisant le tour de la vitre (1) de recouvrement.

11. Vitre de recouvrement suivant la revendication 10, **caractérisée en ce que** le film (4) adhésif recouvre une zone (7) de liaison de la vitre (1) de recouvrement avec un élément de boîtier de l'instrument d'affichage.

12. Vitre de recouvrement suivant l'une des revendications 6 à 9, **caractérisée en ce que** le film adhésif forme un élément (8, 9) graphique d'une affiche d'instrument d'affichage.

13. Vitre de recouvrement suivant l'une des revendications 6 à 12, **caractérisée en ce qu'**elle est essentiellement en PMMA.

14. Vitre de recouvrement suivant l'une des revendications 6 à 13, **caractérisée en ce que** la couche (3) superficielle est une couche anti-reflet et/ou anti-ternissure.

15. Vitre de recouvrement suivant l'une des revendications 6 à 14, **caractérisée en ce que** la couche (3) superficielle est à base de polysiloxanes.
